# EUROPEAN PATENT APPLICATION

(11) **EP 4 598 081 A1**
(43) Date of publication of application: **06.08.2025**
(21) Application number: 24382085.9
(22) Date of filing: 30.01.2024
(51) Int. Cl.: H04W 12/71, H04W 12/76

(54) **ENHANCED TYPE ALLOCATION CODE DATABASE**

(71) Applicant: Vodafone Group Services Limited, Newbury RG14 2FN (GB)
(72) Inventor: PARICIO DIEZ, Carlos, London, W2 6BY (GB); RODRÍGUEZ TROMPETA, Santiago, London, W2 6BY (GB)
(74) Representative: Boult Wade Tennant LLP

(57) **Abstract**

A method comprising: generating an enhanced type allocation code (TAC) database based on an initial TAC database, wherein the initial TAC database comprises a plurality of records, wherein each record corresponds to a respective TAC for a respective set of mobile devices and comprises a first field for storing an identifier of the manufacturer of the respective set of mobile devices and a second field for storing an identifier of the model of the respective set of mobile devices, wherein said generating comprises: adding, to the records of the initial TAC database, one or more additional fields; and populating at least one of the one or more additional fields; wherein at least one of the one or more additional fields added to a record is a third field for storing a further identifier of the respective set of mobile devices, wherein said populating is arranged so that records having (a) identifiers, stored in their first field and corresponding to the same manufacturer and/or (b) identifiers, stored in their second field and corresponding to the same model, have the same further identifier stored in their third field.

## Description

### Field of the invention

The present invention relates to enhanced type allocation code databases and, in particular, methods for generating and using an enhanced type allocation code database and systems and computer programs for carrying out such methods.

### Background of the invention

As is well-known, mobile devices (or wireless devices, such as mobile telephones and some satellite telephones) may have an IMEI (International Mobile Equipment Identity). The IMEI of a mobile device is a number for uniquely identifying that specific mobile device (as opposed to, say, identifying the user of the mobile device or the subscriber for a wireless communication service). More details on IMEIs can be found, for example, at https://en.wikipedia.org/wiki/International_Mobile_Equipment_Identity, the entire disclosure of which is incorporated herein by reference.

The structure of the IMEI is specified in the 3GPP TS 23.003 specification - see https://portal.3gpp.org/desktopmodules/Specifications/SpecificationDetails.aspx?specificati onld=729, the entire disclosure of which is incorporated herein by reference. There have been several versions of the IMEI specification. An IMEI may be 15 or 16 decimal digits, and comprises:
- A TAC (Type Allocation Code)
- Potentially (depending on the specification for the IMEI being used), an FAC (Final Assembly Code)
- A serial number for the device
- Potentially (depending on the specification for the IMEI being used), a check digit or a software version number.

In early specifications for the IMEI, the TAC was 6 decimal digits (the first 6 decimal digits of the IMEI), and an FAC of 2 decimal digits followed the TAC in the IMEI. In the current specification for the IMEI, the TAC is 8 decimal digits (the first 8 decimal digits of the IMEI) and an FAC is not used in the IMEI. It will be appreciated that, in future specifications for the IMEI, the TAC could have a different number of decimal digits and/or could be located at different places within the IMEI. The TAC of an IMEI for a mobile device identifies a particular model of that mobile device (i.e. all mobile devices having the same TAC are of the same model). Under the current TAC specification, the first 2 decimal digits of the TAC are a Reporting Body Identifier, which indicates a body/group that allocated (or provided or assigned) the TAC; the last 6 decimal digits of the TAC are a Type Identifier, which indicates the particular model of the mobile device (although, again, it will be appreciated that this could be different in future versions of the IMEI specification). A TAC is used for (or represents) a batch of units of a mobile device of the (same) corresponding model. In particular, since the serial number of an IMEI for a mobile device is currently a number with 6 decimal digits, assigned to that mobile device by the device manufacturer, each TAC can be used for (or can represent) 1 million units of a mobile device of the (same) corresponding model. It will be appreciated that multiple TACs may be needed for a given model of mobile device, depending on the number of units of that model of mobile device that a device manufacturer makes - for example, if the device manufacturer makes between 2,000,001 and 3,000,000 devices of the same model, then 3 TACs would be needed, where each TAC is used for (or represents) 1 million units of that device model. More details on TACs can be found, for example, at https://en.wikipedia.org/wiki/Type_Allocation_Code, the entire disclosure of which is incorporated herein by reference.

The GSMA TAC database is used to store all TACs (around 226k TACs as of September 2023) - see https://www.gsma.com/services/tac/devicedatabase/ for more details, the entire disclosure of which is incorporated herein by reference. The GSMA TAC database comprises a plurality of records, wherein each record corresponds to a respective TAC (for a respective set of mobile devices of the same model) and comprises a first field for storing an identifier (or indication or name) of the manufacturer of that respective set of mobile devices and a second field for storing an identifier (or indication or name) of the model of that respective set of mobile devices. The record corresponding to a TAC may store further information for that TAC, i.e. information relating to devices of the model identified by that TAC (e.g. uplink/downlink speeds for that model, functionality supported by that model, etc.).

The GSMA TAC database is regularly updated manually by device manufacturers. Unfortunately, over time, this can lead to inconsistencies within the database. For example, two records in the database may be for TACs for the same model (and therefore the same manufacturer) - however, the first record may store a first identifier of the corresponding manufacturer (e.g. "Samsung"), whilst the second record may store a second identifier for that same manufacturer, different from the first identifier, (e.g. "Samsung Electronics"). Similarly, two records in the database may be for TACs for the same model - however, the first record may store a first identifier of the corresponding model (e.g. "Galaxy S23"), whilst the second record may store a second identifier for that same model, different from the first identifier, (e.g. "S23"). Such inconsistencies can cause a number of problems.

For example, a mobile phone network operator may identify that a mobile phone has dropped a call. The network operator will know the IMEI of that mobile phone and, therefore, the TAC for that mobile phone. Thus, the network operator can collect data on dropped call rates (DCRs) for each TAC, with a view, for example, to updating/improving network operations and/or configurations to help reduce DCRs. For example, for a first TAC, the DCR could be 0.34%, whereas for a second TAC, the DCR could be 0.18%. In this example, it is possible that the first and second TACs may relate to the same model of mobile phone. The question then arises as to what is the true/correct DCR for this model, e.g. the correct DCR could be the average, 26%. However, if the GSMA TAC database records for those TACs have inconsistent/different model identifiers and/or manufacturer identifiers, then this data cannot be reconciled easily to determine the true/correct DCR for that model.

Similarly, a fault or a security vulnerability may be identified for certain mobile devices. Knowing the IMEI of those devices, the corresponding TAC(s) can be identified and corresponding action can be taken accordingly (e.g. a message could be sent to each mobile device having the identified TAC(s)). However, other devices of the same model, but with different TACs, may also have this fault or security vulnerability and should also be notified. However, if the GSMA TAC database records for those TACs have inconsistent/different model identifiers and/or manufacturer identifiers, then it may not be possible or easy to identify some/all of the other TACs for which the corresponding action (e.g. message sending) should be taken.

### Summary of the invention

Embodiments of the invention therefore aim to improve such TAC databases so that improved searching and subsequent actions can be performed accordingly.

According to a first aspect of the invention, there is provided a method comprising: generating an enhanced type allocation code (TAC) database based on an initial TAC database, wherein the initial TAC database comprises a plurality of records, wherein each record corresponds to a respective TAC for a respective set of mobile devices and comprises a first field for storing an identifier of the manufacturer of the respective set of mobile devices and a second field for storing an identifier of the model of the respective set of mobile devices, wherein said generating comprises: adding, to the records of the initial TAC database, one or more additional fields; and populating at least one of the one or more additional fields; wherein at least one of the one or more additional fields added to a record is a third field for storing a further identifier of the respective set of mobile devices, wherein said populating is arranged so that records having (a) identifiers, stored in their first field and corresponding to the same manufacturer and/or (b) identifiers, stored in their second field and corresponding to the same model, have the same further identifier stored in their third field.

In some embodiments, said populating comprises using a set of one or more rules, wherein each rule represents a mapping that maps one or more identifiers for a particular manufacturer and/or for a particular model to the same further identifier.

In some embodiments: a third party is responsible for generating the initial TAC database and the method is performed by an entity other than the third party; said method comprises the entity obtaining the initial TAC database from a computer system of the third party; and the generated enhanced TAC database is stored at a computer system of the entity.

In some embodiments, the method comprises: receiving, from a client system, a database query; generating a response to the database query using the generated enhanced TAC database; and providing the generated response to the client system.

According to second aspect of the invention, there is provided a method comprising: obtaining, for each mobile device of a plurality of mobile devices, corresponding device data, wherein the device data relates to one or more of: performance of the mobile device; configuration of the mobile device; and operational properties of the mobile device; for each mobile device of the plurality of mobile devices, associating the corresponding device data with a further identifier, the further identifier stored in a third field of a record of an enhanced TAC database generated by a method according to the above-discussed first aspect, the record corresponding to the TAC for that mobile device; and determining a characteristic of a group of mobile devices, the group of mobile devices corresponding to one or more further identifiers, based on the device data associated with the one or more further identifiers.

In some embodiments, the group of mobile devices corresponds, at least in part, to:
(a) the mobile devices of a particular model; and/or (b) the mobile devices manufactured by a particular manufacturer.

In some embodiments, said associating comprises determining, for at least one mobile device of the plurality of mobile devices, the TAC for that mobile device based on the International Mobile Equipment Identity (IMEI) for that mobile device.

In some embodiments, the method comprises performing one or more actions in respect of said group of mobile devices if the determined characteristic of said group of mobile devices meets one or more criteria for said characteristic.

In some embodiments, the characteristic comprises a dropped call rate. The method may then comprise identifying a manufacturer and/or a model of a mobile device having a high drop call rate.

In some embodiments, the characteristic comprises a security characteristic. The method may then comprise identifying a manufacturer and/or a model of a mobile device having a security characteristic indicative of a security vulnerability.

According to a third aspect of the invention, there is provided a system arranged to carry out a method according to the above-discussed first aspect (or any embodiment thereof) or the above-discussed second aspect (or any embodiment thereof).

According to a fourth aspect of the invention, there is provided a computer program which, when executed by one or more processors, causes the one or more processors to carry out a method according to the above-discussed first aspect (or any embodiment thereof) or the above-discussed second aspect (or any embodiment thereof). The computer program may be stored on a computer-readable medium.

### Brief description of the drawings

Embodiments of the invention will now be described, by way of example only, with reference to the accompanying drawings, in which:
Figure 1 schematically illustrates an example system according to some embodiments of the invention;
Figure 2 schematically illustrates an example database structure (or table) for an initial TAC database;
Figure 3 is a flow diagram illustrating a method, according to some embodiments of the invention, for an enhanced database system to generate an enhanced TAC database based on an initial TAC database;
Figures 4a-e schematically illustrates example database structures (or tables) for an enhanced TAC database;
Figures 5a-c illustrates example rules that may be used to populate fields of an enhanced TAC database;
Figure 6 is a flow diagram illustrating a method, according to some embodiments of the invention, for a client system to make use of an enhanced database; and
Figure 7 schematically illustrates an example of a computer system.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

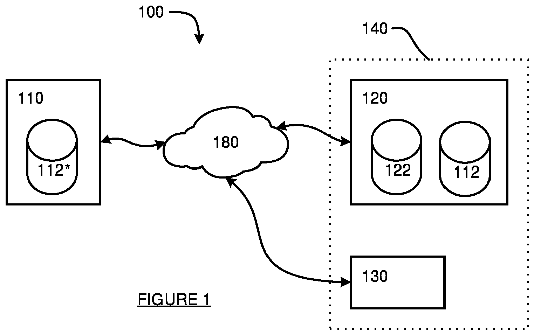

Figure 1 schematically illustrates an example system 100 according to some embodiments of the invention. The system 100 comprises: a database system (or first computer system) 110 that has (or stores or provides) a TAC database 112*; an enhanced database system (or second computer system) 120 that generates (and therefore has or stores or provides) a TAC database 122 (referred to herein as the enhanced TAC database 122); and, optionally, a client system 130. The database system 110, the enhanced database system 120 and the client system 130 may communicate with each other over a communications network 180.

In summary, the enhanced database system 120 has its own (local) copy of the TAC database 112*. This copy shall be referred to herein as the initial TAC database 112. The enhanced database system 120 may obtain the initial TAC database 112 (via the communications network 180), e.g. if it does not already have a copy of the TAC database 112* provided by the database system 110. However, it is possible that the enhanced database system 120 may have been responsible for initially generating the TAC database 112* and the enhanced database system 120 may, therefore, already have its own copy thereof, i.e. the enhanced database system 120 may already have the initial TAC database 112. The enhanced database system 120 may add one or more additional fields to the records of the initial TAC database 112, and then populate at least one of those additional fields, to thereby form the enhanced TAC database 122. This may involve updating, within the initial TAC database 112, the records of the initial TAC database 112, thereby transforming the initial TAC database 112 into the enhanced TAC database 122. Alternatively, this may involve creating copies of the records of the initial TAC database 112 and adding fields to those copies, thereby forming the enhanced TAC database 122 as a separate database from the initial TAC database 112. The enhanced TAC database 122 is an "enhanced" (or updated or modified) version of the initial TAC database 112 (and therefore also an "enhanced" (or updated or modified) version of the TAC database 112*) due to the presence of the one or more populated additional fields. The client system 130 may access the enhanced TAC database 122 for various processing, which may involve making use of one or more of the additional fields that were added when generating the enhanced TAC database 122. More detail relating to the additional fields shall be set out later.

In some embodiments, the client system 130 is operated by a different entity than the entity which operates the enhanced database system 120. However, in other embodiments, the client system 130 and the enhanced database system 120 may be operated by the same entity and, indeed, they could be parts (or subsystems) of a single overall system (illustrated by the dotted line 140).

The communications network 180 may be any network capable of communicating data digitally. For example, the communications network 180 may comprise one or more of: the internet, a local area network, a wide area network, a metropolitan area network, a satellite communications network, etc.

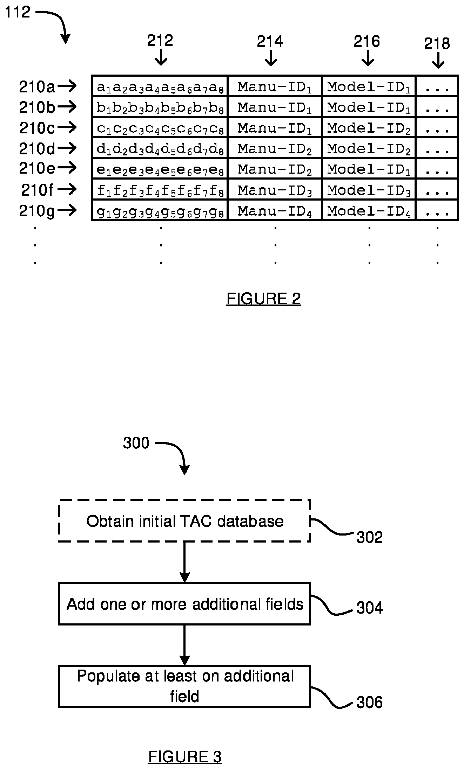

Figure 2 schematically illustrates an example database structure (or table) for the initial TAC database 112. It will, of course, be appreciated that this is merely one example and that other database structures (e.g. involving one or more database tables with different fields, indexing, etc.) could be used instead.

As mentioned, the initial TAC database 112 comprises a plurality of records 210. Each record 210 corresponds to a respective TAC 212 for a respective set of mobile devices (the TAC 212 being represented in a field of the record 210). As discussed above, the respective set of mobile devices are the mobile devices having an IMEI that comprises that respective TAC 212 - thus, as mentioned, for a given TAC 212, given that the serial number for the mobile device that forms part of the IMEI has 6 decimal digits (according to the current IMEI specification), the respective set of mobile devices may be up to 1 million units of mobile devices to which that TAC has been assigned. Each record 210 comprises a first field 214 for storing an identifier (or name or indication) of the manufacturer of the respective set of mobile devices and a second field 216 for storing an identifier (or name or indication) of the model of the respective set of mobile devices. Each record 210 may have one or more further fields 218 (e.g. one or more fields to indicate a characteristic/attribute of a mobile device of the corresponding model, and/or one or more fields to indicate a capability of a mobile device of the corresponding model, etc.).

In this example:
- The record 210a corresponds to the TAC with 8 decimal digits a₁a₂a₃a₄a₅a₆a₇a₈. This TAC is used for mobile devices of the model indicated by the model identifier Model-ID₁ (e.g. "iPhone 15", "Galaxy S23", etc.) as manufactured by the manufacturer indicated by the manufacturer identifier Manu-ID₁ (e.g. "Apple", "Samsung", etc.). As mentioned previously, under the current IMEI specification, the serial number for the mobile device that forms part of the IMEI has 6 decimal digits and can, therefore, represent 1 million units - thus, in the example shown in figure 2, the TAC a₁a₂a₃a₄a₅a₆a₇a₈ can be used for the IMEI for 1 million different units of the Model-ID₁ type of mobile device manufactured by the manufacturer manu-ID₁.
- The record 210b corresponds to the TAC with 8 decimal digits b₁b₂b₃b₄b₅b₆b₇b₈. As with the TAC a₁a₂a₃a₄a₅a₆a₇a₈, the TAC b₁b₂b₃b₄b₅b₆b₇b₈ is used for mobile devices of the model indicated by the model identifier Model-ID₁ as manufactured by the manufacturer indicated by the manufacturer identifier Manu-ID₁. The TAC b₁b₂b₃b₄b₅b₆b₇b₈ may be required by the manufacturer Manu-ID₁ in addition to the TAC a₁a₂a₃a₄a₅a₆a₇a₈ because the manufacturer Manu-ID₁ may have made more units of the mobile device of the model indicated by the model identifier Model-ID₁ than the TAC a₁a₂a₃a₄a₅a₆a₇a₈ could represent on its own (i.e. more than 1 million units).
- The record 210c corresponds to the TAC with 8 decimal digits c₁c₂c₃c₄c₅c₆c₇c₈. This TAC is used for mobile devices of the model indicated by the model identifier Model-ID₂ as manufactured by the manufacturer indicated by the manufacturer identifier manu-ID₁ (i.e. the same manufacturer as for the TACs in the records 21 0a, 210b). It is possible that the model identifier Model-ID₂ could be for a different model of mobile device than the model identified by the model identifier Model-ID₁ (e.g. Model-ID₂ is "Galaxy S24" whereas Model-ID₁ is "Galaxy S23"). However, as mentioned previously, due to methods of entering new records in the initial TAC database 112, it is possible that the model identifier Model-ID₂ could be for the same model as the model identified by the model identifier Model-ID₁ (e.g. Model-ID₁ is "Galaxy S23" where Model-ID₂ is the shorthand "S23").
- The record 210d corresponds to the TAC with 8 decimal digits d₁d₂d₃d₄d₅d₆d₇d₈. This TAC is used for mobile devices of the model indicated by the model identifier Model-ID₂ as manufactured by the manufacturer indicated by the manufacturer identifier Manu-ID₂ (i.e. the same manufacturer as for the TACs in the records 21 0c). Given that the record 210c has model identifier Model-ID₂ too, but manufacturer identifier Manu-ID₁, it is clear that the manufacturer identifier Manu-ID₂ is for the same manufacturer as the manufacturer identified by the manufacturer identifier manu-ID₁ (e.g. Manu-ID₂ is "Samsung Electronics" whereas Manu-ID₁ is just "Samsung").
- The record 210e corresponds to the TAC with 8 decimal digits e₁e₂e₃e₄e₅e₆e₇e₈. This TAC is used for mobile devices of the model indicated by the model identifier Model-ID₁ as manufactured by the manufacturer indicated by the manufacturer identifier Manu-ID₂. As this is the same model identifier as for the TACs in the records 210a, 210b, it is clear that the manufacturer identifier Manu-ID₂ is for the same manufacturer as the manufacturer identified by the manufacturer identifier manu-ID₁ (e.g. Manu-ID₂ is "Samsung Electronics" whereas Manu-ID₁ is just "Samsung").
- The record 210f corresponds to the TAC with 8 decimal digits f₁f₂f₃f₄f₅f₆f₇f₈. This TAC is used for mobile devices of the model indicated by the model identifier Model-ID₃ as manufactured by the manufacturer indicated by the manufacturer identifier Manu-ID₃. It is possible that the manufacturer identified by the manufacturer identifier Manu-ID₃ is for the same manufacturer as, or a different manufacture than, the manufacturer identified by the manufacturer identifier Manu-ID₁ or Manu-ID₂. Likewise, it is possible that the model identified by the model identifier Model-ID₃ is for the same model as, or a different model than, the model identified by the model identifier Model-ID₁ or Model-ID₂.
- The record 210g corresponds to the TAC with 8 decimal digits g₁g₂g₃g₄g₅g₆g₇g₈. This TAC is used for mobile devices of the model indicated by the model identifier Model-ID₄ as manufactured by the manufacturer indicated by the manufacturer identifier Manu-ID₄. It is possible that the manufacturer identified by the manufacturer identifier Manu-ID₄ is for the same manufacturer as, or a different manufacture than, the manufacturer identified by the manufacturer identifier Manu-ID₁ or Manu-ID₂ or Manu-ID₃. Likewise, it is possible that the model identified by the model identifier Model-ID₉ is for the same model as, or a different model than, the model identified by the model identifier Model-ID₁ or Model-ID₂ or Model-ID₃.

It will be appreciated that the initial TAC database 112 may have many more records than shown in figure 2. Consequently, the scope of potential inconsistencies in manufacturer identifier and/or model identifier is large.

The initial TAC database 112 may correspond to the whole, or a part, of the GSMA TAC database discussed above, in which case the database system 110 may be a system operated by the GSMA, with the TAC database 112* being the whole, or a part, of the GSMA TAC database.

Figure 3 is a flow diagram illustrating a method 300, according to some embodiments of the invention, for the enhanced database system 120 to generate the enhanced TAC database 122 based on the initial TAC database 112.

At an optional step 302, the enhanced database system 120 obtains the initial TAC database 302. This is an optional step because the enhanced database system 120 may already have, or may already be storing, the initial TAC database 112. Indeed, in some embodiments, the enhanced database system 120 may be the same entity as the entity that generates/provides the TAC database 112* at the database system 110. However, in embodiments in which a third party (the database system 110) is responsible for generating the TAC database 112* (and, therefore, the initial TAC database 112) and the method 300 is performed by an entity (the enhanced database system 120) other than the third party, then the method 300 may comprise the entity (the enhanced database system 120) carrying out the step 302, i.e. obtaining the initial TAC database 112 (as a copy of the TAC database 112*) from a computer system of the third party. For example, the enhanced database system 120 may download a copy of the TAC database 112* from the database system 110 via the network 180.

At a step 304, the enhanced database system 120 adds, to the records of the initial TAC database 112 at the enhanced database system 120, one or more additional fields. For example, one or more additional columns may be added to the database table(s) used for the initial TAC database 112. The nature of these one or more additional fields shall be described shortly. As discussed above, the step 304 may involve updating, within the initial TAC database 112, the records of the initial TAC database 112, thereby transforming the initial TAC database 112 into the enhanced TAC database 122. Alternatively, this may involve creating copies of the records of the initial TAC database 112 and adding fields to those copies, thereby forming the enhanced TAC database 122 as a separate database from the initial TAC database 112.

At a step 306, the enhanced database system 120 populates at least one of the one or more additional fields. The nature of the population of these additional fields shall be described shortly.

Thus, at the end of the step 306, the enhanced database system 120 has generated the enhanced database 122. The enhanced database 122 is stored (at least initially) at the enhanced database system 120.

Preferably, when generating the enhanced TAC database 122 based on the initial TAC database 112, the enhanced database system 120 does not delete any fields from the records 210 in the initial TAC database 112 (e.g. does not delete any columns from the database table(s) used for the initial TAC database 112). In this way, the enhanced TAC database 122 retains all of the initial information in the initial TAC database 112. However, in some embodiments, the enhanced database system 120 may delete one or more fields from the records 210 in the initial TAC database 112 - e.g. one or more fields that become redundant due to the inclusion of the one or more additional fields.

As described above, the enhanced database system 120 may then receive, from the client system 130, a database query (e.g. via the communications network 180). The enhanced database system 120 may then generate a corresponding response (in line with usual database management operations and query resolution) using the enhanced TAC database 122 and provide the generated response back to the client system 130 (e.g. via the communications network 180).

In embodiments of the invention, at least one of the one or more additional fields added to a record 210 at the step 304 is a third field for storing a further identifier of the respective set of mobile devices (corresponding to the TAC 212 for that record 210), and the populating performed at the step 306 is arranged so that records 210 having (a) manufacturer identifiers, stored in their first field 214 and corresponding to the same manufacturer and/or (b) model identifiers, stored in their second field 216 and corresponding to the same model, have the same further identifier stored in their third field.

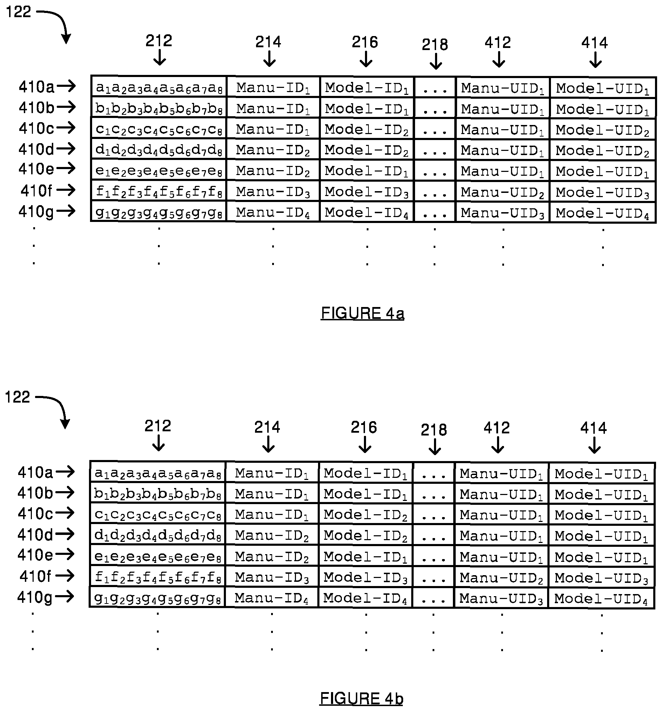

Figure 4a schematically illustrates an example database structure (or table) for the enhanced TAC database 122. It will, of course, be appreciated that this is merely one example and that other database structures (e.g. involving one or more database tables with different fields, indexing, etc.) could be used instead. In figure 4a, records 410a-g in the enhanced TAC database 122 correspond to the records 210a-g of the initial TAC database 112 - in particular, the records 410a-g of the enhanced TAC database 122 were formed by adding additional fields 412, 414 to the corresponding records 210a-g of the initial TAC database 112 and populating those additional fields 412, 414 accordingly.

In the example of figure 4a, the additional field 412 is for storing a unified (or uniform) manufacturer identifier. In particular, if two records 210 in the initial TAC database 112 relate to TACs for devices made by the same manufacturer, then the corresponding records in the enhanced TAC database 122 should have the same unified manufacturer identifier in their additional field 412, whereas if two records 210 in the initial TAC database 112 relate to TACs for devices made by different manufacturers, then the corresponding records in the enhanced TAC database 122 should have different unified manufacturer identifiers in their additional field 412. Similarly, in the example of figure 4a, the additional field 414 is for storing a unified (or uniform) model identifier. In particular, if two records 210 in the initial TAC database 112 relate to TACs for the same device model then the corresponding records in the enhanced TAC database 122 should have the same unified model identifier in their additional field 414, whereas if two records 210 in the initial TAC database 112 relate to TACs for different device models, then the corresponding records in the enhanced TAC database 122 should have different unified model identifiers in their additional field 414.

For example, if Manu-IDz is "Samsung Electronics" and Manu-ID₁ is just "Samsung", and these manufacturer identifies from the field 214 relate to the same manufacturer, then the unified manufacturer identifier in the field 412 for the records 410a-e is the same Manu-UID₁ (which could assume a value such as "Samsung"). In this way, a database search based on the field 412 would identify all of the records 410a-e as corresponding to the same manufacturer "Samsung". In contrast, searching the initial TAC database 112 based on the manufacturer identifier 214 is more difficult or gives inconsistent/incomplete results - for example, a search might only return the records 210a-c that have manufacturer identifier Manu-ID₁ in the field 214, or might only return the records 210d-e that have the manufacturer identifier Manu-ID₂ in the field 214.

As can be seen in figure 4a, Manu-ID₃ and Manu-ID₄ relate to different manufacturers, and different from manu-ID₁ and Manu-ID₃. Therefore, the records 410f and 410g have their own, different, unified manufacturer identifiers manu-UID₂ and Manu-UID₃.

Continuing this example, if Model-ID₂ is "Galaxy S24" whereas Model-ID₁ is "Galaxy S23", then these model identifiers from the field 216 relate to different models. Hence, in figure 4a, the records 410a, 410b and 410e have the same unified model identifier Model-UID₁ in the additional field 414, whilst the records 410c and 410d have the same unified model identifier Model-UID₂ in the additional field 414, that is different from the unified model identifier Model-UID₁. However, if Model-ID₁ is "Galaxy S23" and Model-ID₂ is the shorthand "s23", then these relate to the same model, and so the same unified model identifier would be used in the additional field 414 for all of the records 410a-e, as shown in figure 4b - for example, in figure 4b, the unified model identifier Model-UID₁ is used (which could assume a value such as "Galaxy S23").

As can be seen in figures 4a and 4b, Model-ID₃ and Model-ID₄ relate to different models, and different from Model-ID₁ and Model-ID₂. Therefore, the records 410f and 410g have their own, different, unified model identifiers Model-UID₃ and Model-UID₄.

As mentioned, it is preferable if all of the initial fields from the initial TAC database 112 are retained in the enhanced TAC database 122. However, in some embodiments, one or more of the initial fields in the initial TAC database 112 could be deleted, or not included in, the enhanced TAC database 122, for example if they become redundant. As an example, given the presence of the unified manufacturer field 412, deletion (or omission) of the manufacturer identifier field 214 could be performed. Likewise, given the presence of the unified model field 414, deletion (or omission) of the model identifier field 216 could be performed.

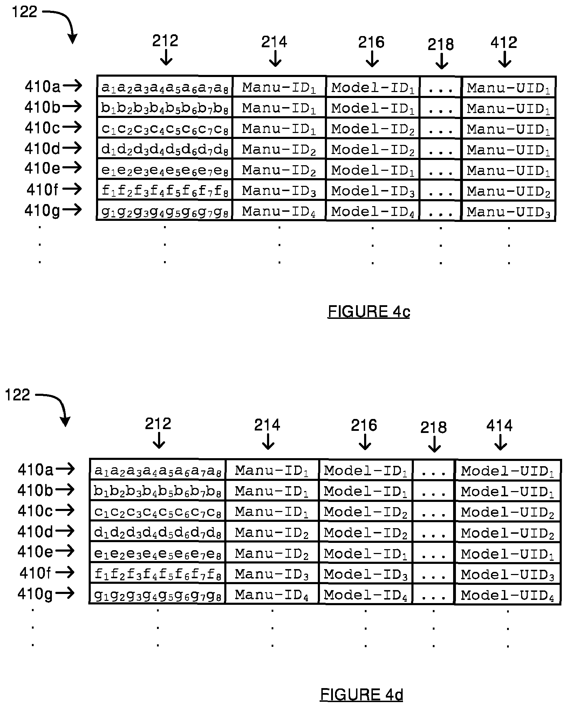

Figure 4c is similar to figure 4a, but without the inclusion of the additional field 414 for the unified model identifier - this enables enhanced searches/analysis based on manufacturer (by virtue of the additional field 412 for the unified manufacturer identifier), but does not enable enhanced searches/analysis based on model. Likewise, figure 4d is similar to figure 4a, but without the inclusion of the additional field 412 for the unified manufacturer identifier - this enables enhanced searches/analysis based on model (by virtue of the additional field 414 for the unified model identifier), but does not enable enhanced searches/analysis based on manufacturer.

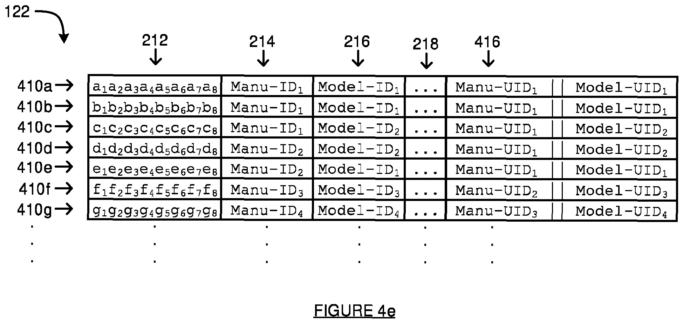

Figure 4e is similar to figure 4a but, instead of having two additional fields (the first additional field 412 for storing a unified manufacturer identifier and the second additional field 414 for storing a unified model identifier), there is a single additional field 416 for storing a unified manufacturer+model identifier. In particular, if two records 210 in the initial TAC database 112 relate to TACs for the same model of device made by the same manufacturer, then the corresponding records in the enhanced TAC database 122 should have the same unified manufacturer+model identifier in their additional field 416, whereas if two records 210 in the initial TAC database 112 relate to TACs for devices made by different manufacturers or for different models, then the corresponding records in the enhanced TAC database 122 should have different unified manufacturer+model identifiers in their additional field 416. In the example of figure 4e, the unified manufacturer+model identifier is the concatenation (indicated by the symbol ∥) of the unified manufacturer identifier and the unified model identifier of figure 4a.

Whilst figure 4e illustrates the additional field 416 being used instead of the additional fields 412, 414, it will be appreciated that the additional field 416 could be used in conjunction with the additional field(s) 412 and/or 414 in other embodiments of the invention.

The step 304 of the method 300 in figure 3 therefore comprises including one or more such additional fields 412, 414, 416 (or similar). The particular choice of which additional field(s) to include in the records 410 will depend on the desired enhanced functionality that is intended (e.g. if improved searching based on manufacturer is desired, then inclusion of the additional field 412 or 416 would be useful; if improved searching based on model is desired, then inclusion of the additional field 414 or 416 would be useful).

The step 306 of populating the one or more additional fields may be performed in a variety of ways. For example, populating the one or more additional fields may comprise using a set of one or more rules, where each rule represents a mapping that maps one or more identifiers for a particular manufacturer and/or for a particular model to the same further identifier (e.g. unified model identifier, unified manufacturer identifier, unified manufacturer+model identifier, etc.)

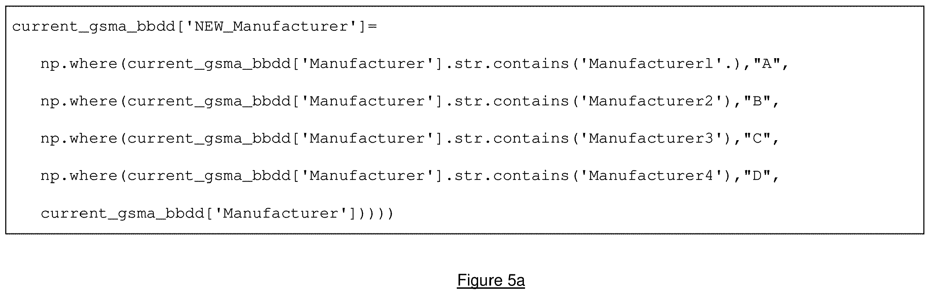

Figure 5a illustrates an example rule that may be used at the step 306. In particular, with the rule in figure 5a:
- The additional field 412 (for the unified manufacturer identifier) is called "NEW_Manufacturer" whilst the original field 214 (for the manufacturer identifier) is called "Manufacturer".
- For a record 210, if the manufacturer identifier in the original "Manufacturer" field 214 contains the string "Manufacturer1", then in the corresponding record 410, the unified manufacturer identifier in the additional "NEW_Manufacturer" field 412 is set to "A". Thus, the rule depicted in figure 5a represents a mapping that maps any manufacturer identifier that contains the text "Manufacturer1" to the same unified manufacturer identifier "A" for the enhanced TAC database 122. Similarly, for a record 210, if the manufacturer identifier in the original "Manufacturer" field 214 contains the string "Manufacturer2", then in the corresponding record 410, the unified manufacturer identifier in the additional "NEW_Manufacturer" field 412 is set to "B"; if the manufacturer identifier in the original "Manufacturer" field 214 contains the string "Manufacturer3", then in the corresponding record 410, the unified manufacturer identifier in the additional "NEW_Manufacturer" field 412 is set to "c"; and if the manufacturer identifier in the original "Manufacturer" field 214 contains the string "Manufacturer4", then in the corresponding record 410, the unified manufacturer identifier in the additional "NEW_Manufacturer" field 412 is set to "D". Thus, the rule depicted in figure 5a represents a mapping that additionally: maps any manufacturer identifier that contains the text "Manufacturer2" to the same unified manufacturer identifier "B" for the enhanced TAC database 122; maps any manufacturer identifier that contains the text "Manufacturer3" to the same unified manufacturer identifier "c" for the enhanced TAC database 122; and maps any manufacturer identifier that contains the text "Manufacturer4" to the same unified manufacturer identifier "D" for the enhanced TAC database 122.
- If the manufacturer identifier in the original "Manufacturer" field 214 does not contain any of the strings "Manufacturer1", "Manufacturer2", "Manufacturer3" or "Manufacturer4" then in the corresponding record 410, the unified manufacturer identifier in the additional "NEW_Manufacturer" field 412 is set to the manufacturer identifier in the original "Manufacturer" field 214. Thus, the rule depicted in figure 5a represents a mapping that, for each of these "other" (or remaining) manufacturer identifiers, maps that other manufacturer identifier to a unified manufacturer identifier having the same name for the enhanced TAC database 122.
- Therefore, for example, if the string "Manufacturer1" were actually the string "Samsung", and if "A" were set to "samsung", then for any records 210 in the initial TAC database 112 having a manufacturer identifier of "samsung" or "Samsung Electronics", the corresponding records 410 in the enhanced TAC database 122 would all have the same unified manufacturer identifier, namely "Samsung", in the additional field 412.

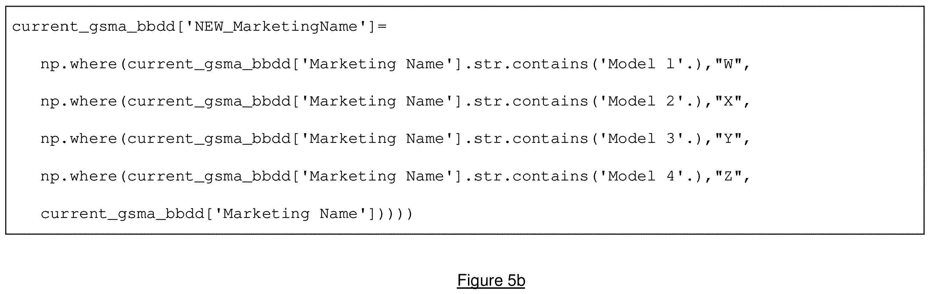

Figure 5b illustrates an example rule that may be used at the step 306. In particular, with the rule in figure 5b:
- The additional field 414 (for the unified model identifier) is called "NEW_MarketingName" whilst the original field 216 (for the model identifier) is called "Marketing Name".
- For a record 210, if the model identifier in the original "Marketing Name" field 216 contains the string "Model 1", then in the corresponding record 410, the unified model identifier in the additional "NEW_MarketingName" field 414 is set to "w". Thus, the rule depicted in figure 5b represents a mapping that maps any model identifier that contains the text "Model 1" to the same unified model identifier "w" for the enhanced TAC database 122. Similarly, for a record 210, if the model identifier in the original "Marketing Name" field 216 contains the string "Model 2", then in the corresponding record 410, the unified model identifier in the additional "NEW_MarketingName" field 414 is set to "x"; if the model identifier in the original "Marketing Name" field 216 contains the string "Model 3", then in the corresponding record 410, the unified model identifier in the additional "NEW_MarketingName" field 414 is set to "Y"; and if the model identifier in the original "Marketing Name" field 216 contains the string "Model 4", then in the corresponding record 410, the unified model identifier in the additional "NEW_MarketingName" field 414 is set to "z". Thus, the rule depicted in figure 5b represents a mapping that additionally: maps any model identifier that contains the text "Model 2" to the same unified model identifier "x" for the enhanced TAC database 122; maps any model identifier that contains the text "Model 3" to the same unified model identifier "Y" for the enhanced TAC database 122; and maps any model identifier that contains the text "Model 4" to the same unified model identifier "z" for the enhanced TAC database 122.
- If the model identifier in the original "Marketing Name" field 216 does not contain any of the strings "Model 1", "Model 2", "Model 3" or "Model 4" then in the corresponding record 410, the unified model identifier in the additional "NEW_MarketingName" field 414 is set to the model identifier in the original "Marketing Name" field 216. Thus, the rule depicted in figure 5b represents a mapping that, for each of these "other" (or remaining) model identifiers, maps that other model identifier to a unified model identifier having the same name for the enhanced TAC database 122.
- Therefore, for example, if the string "Model 1" were actually the string "s23", and if "w" were set to "Galaxy S23", then for any records 210 in the initial TAC database 112 having a model identifier of "s23" or "Galaxy s23" or "Samsung S23", the corresponding records 410 in the enhanced TAC database 122 would all have the same unified model identifier, namely "Galaxy S23", in the additional field 414.

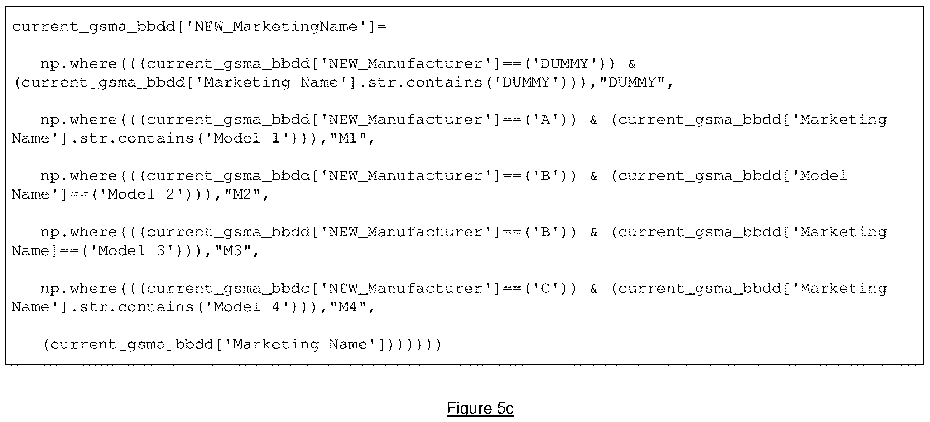

The rules shown in figures 5a and 5b are independent of each other and could be applied sequentially or in parallel. However, it will be appreciated that, in some embodiments, one rule may need to be applied after another rule has been applied. For example, figure 5c illustrates an example rule that may be used at the step 306. This rule is applied after the rule in figure 5a has been applied (i.e. after the additional "NEW_Manufacturer" field 412 has been populated, because the rule in figure 5c relies on the values in populated additional "NEW_Manufacturer" field 412). The rule in figure 5c may be used to populate the additional "NEW_MarketingName" field 414 instead of the rule in figure 5b. In particular, with the rule in figure 5c:
- The additional field 414 (for the unified model identifier) is called "NEW_MarketingName". The initial TAC database 216 may have multiple fields 216 to help identify the model. In this example, one of these fields is called "Marketing Name" (indicating the name under which the mobile device is marketed), and another of these fields is called "Model Name" (indicating a more official model name used by the manufacturer).
- For a record 210, if the additional "NEW_Manufacturer" field 412 in the corresponding record 410 is "DUMMY" whilst the "Marketing Name" in the record 210 contains the string "DUMMY", then the unified model identifier in the additional "NEW_MarketingName" field 414 is set to "DUMMY".
- For a record 210, if the additional "NEW_Manufacturer" field 412 in the corresponding record 410 is "A" whilst the "Marketing Name" in the record 210 contains the string "Model 1", then the unified model identifier in the additional "NEW_MarketingName" field 414 is set to "M1".
- For a record 210, if the additional "NEW_Manufacturer" field 412 in the corresponding record 410 is "B" whilst the "Model Name" in the record 210 is the string "Model 2", then the unified model identifier in the additional "NEW_MarketingName" field 414 is set to "M2".
- For a record 210, if the additional "NEW_Manufacturer" field 412 in the corresponding record 410 is "B" whilst the "Marketing Name" in the record 210 is the string "Model 3", then the unified model identifier in the additional "NEW_MarketingName" field 414 is set to "M3".
- For a record 210, if the additional "NEW_Manufacturer" field 412 in the corresponding record 410 is "c" whilst the "Marketing Name" in the record 210 contains the string "Model 4", then the unified model identifier in the additional "NEW_MarketingName" field 414 is set to "M4".
- Otherwise, the unified model identifier in the additional "NEW_MarketingName" field 414 is set to the "Marketing Name" in the record 210.

In addition to, or as alternative to, the use of mapping rules (as discussed abovewith respect to the examples in figures 5a-c), the enhanced database system 120 may apply one or more deductive rules at the step 306 for populating the one or more additional fields. For example, the enhanced database system 120 could apply a rule that concludes that all records 210 having the same model identifier 216 are manufactured by the same manufacturer and, therefore, the corresponding records 410 should have the same unified manufacturer identifier 412. Applying this to the example discussed above with reference to figure 2, the records 210c and 210d have the same model identifier 216 (namely "Model-ID₂") but different manufacturer identifiers 214 (namely "Manu-ID₁" and "Manu-ID₂") and, therefore, this deductive rule would require the corresponding records 410c and 410d to have the same unified manufacturer identifier (namely "Manu-UID₁" as per figure 4a). Such a deduction could equally be made based on the records 210a (or 210b) and 210e. It will be appreciated that other such deductive rules could be applied without requiring a mapping (or a configuration to be provided/generated for mapping rules).

In some embodiments, an additional field of a record 410 in the enhanced TAC database 122 may comprise a list of one or more values (e.g. a list delimited by a predetermined delimiter). Additionally, or alternatively, an additional field of a record 410 in the enhanced TAC database 122 may comprise a value with a wildcard token (e.g. a predetermined character). Such examples may provide additional flexibility when performing searches based on the enhanced TAC database 122.

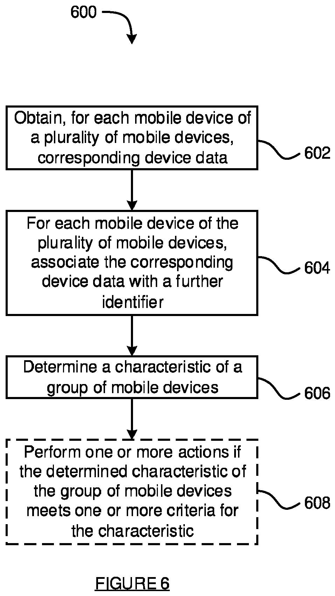

Figure 6 is a flow diagram illustrating a method 600, according to some embodiments of the invention, for the client system 300 to make use of the enhanced TAC database 122 generated by the enhanced database system 120 (e.g. via the method 300 set out above).

At a step 602, the client system 300 obtains, for each mobile device of a plurality of mobile devices, corresponding device data. The device data for a mobile device relates to one or more of: performance of the mobile device; configuration of the mobile device; and operational properties of the mobile device. For example, the client system 300 may be operated by a mobile telephone network operator, in which case the plurality of mobile devices for which the client system 300 obtains device data at the step 602 may be the mobile devices that make use of the telephone network operated by that network operator. For each mobile device, the network operator may be able to determine data relating to: the performance of the mobile device (e.g. data upload rates; data download rates; call quality; number of dropped calls; etc.); configuration of the mobile device (e.g. use of 3G, 4G, 5G; operating system version used by the mobile device; security configuration of the mobile device; use of calls over Wi-Fi; enabled use of data transfer over a telecommunications network as opposed to over a local network, such as a Wi-Fi network; etc.); operational properties of the mobile device (e.g. number of calls made; when calls have been made; length of calls; etc.). As another example, the client system 300 may be operated by a manufacturer that may be able to acquire some or all of the above-mentioned device data. It will be appreciated that these are merely examples and that other examples of client systems 300 and device data are possible.

At a step 604, for each mobile device of the plurality of mobile devices, the client system 300 associates the corresponding device data with a further identifier, where this further identifier is an identifier stored in a third field (namely one of the additional fields for a unified identifier) of a record 410 of the enhanced TAC database 122, where the record 410 corresponds to the TAC for that mobile device. For example, based on the IMEI of the mobile device, the TAC for that mobile device can be determined (currently as the first 8 decimal digits of the IMEI). Thus, the corresponding record 410 for that TAC in the enhanced TAC database 122 can be determined and the corresponding further identifier (or unified identifier) for that mobile device can be determined from that record 410. In this way, the collected/obtained device data can be associated with that further identifier.

At a step 606, the client system 300 determines a characteristic of a group of mobile devices. Here, the group of mobile devices corresponds to one or more further identifiers, and the characteristic for that group of mobile devices is determined based on the device data associated with the one or more further identifiers.

For example, for mobile devices having a TAC of a₁a₂a₃a₄a₅a₆a₇a₈, the record 210a for that TAC in the initial TAC database 112 indicates a manufacturer identifier 214 of "Manu-ID1" and a model identifier 216 of "Model-ID1". Likewise, for mobile devices having a TAC of d₁d₂d₃d₄d₅d₆d₇d₈, the record 210d for that TAC in the initial TAC database 112 indicates a manufacturer identifier 214 of "Manu-ID2" and a model identifier 216 of "Model-ID2". If use is only made of the initial TAC database 112, then device data could be collected for these mobile devices, and the device data collected for the mobile devices having a TAC of a₁a₂a₃a₄a₅a₆a₇a₈ would be associated with the manufacturer "Manu-ID1" and the model "Model-ID1", whilst the device data collected for the mobile devices having a TAC of d₁d₂d₃d₄d₅d₆d₇d₈ would be associated with the manufacturer "_{M}anu-ID2" and the model "Model-ID2". Thus, for example, a characteristic, such as a dropped-call-rate, for manufacturer "Manu-ID1" or for model "Model-ID1" could be determined based on the device data collected for mobile devices having a TAC of a₁a₂a₃a₄a₅a₆a₇a₈, whilst that characteristic could be determined separately for manufacturer "_{M}anu-ID2" or for model "Model-ID2" could be determined based on the device data collected for mobile devices having a TAC of d₁d₂d₃d₄d₅d₆d₇d₈. However, if use is made of the identifiers in the additional field(s) of the enhanced TAC database 122, then more accurate characteristic determination can be performed. For example, if (as per the example, shown in figure 4a) manufacturer identifiers "Manu-ID1" and "_{M}anu-ID2" relate to the same manufacturer, they will have the same unified manufacturer identifier "Manu-UID1" and, likewise, if model identifiers "Model-ID1" and "Model-ID2" relate to the same model, they will have the same unified model identifier "Model-UID1". In this way, device data collected for mobile devices having a TAC of a₁a₂a₃a₄a₅a₆a₇a₈, b₁b₂b₃b₄b₅b₆b₇b₈, c₁c₂c₃c₄c₅c₆c₇c₈ or d₁d₂d₃d₄d₅d₆d₇d₈ may be associated with the unified manufacturer "Manu-UID1" and the unified model "Model-UID1". Thus, the characteristic, such as a dropped-call-rate, for manufacturer "Manu-UID1" or for model "Model-UID1" could be determined based on the larger set of mobile devices (those having a TAC of a₁a₂a₃a₄a₅a₆a₇a₈, b₁b₂b₃b₄b₅b₆b₇b₈, c₁c₂c₃c₄c₅c₆c₇c₈ or d₁d₂d₃d₄d₅d₆d₇d₈), so that a more accurate characteristic could be determined.

As indicated above, the group of mobile devices for which the characteristic may be determined may correspond, at least in part, to: (a) the mobile devices of a particular model (e.g. if the device data is associated with a unified model identifier or a unified manufacturer+model identifier); and/or (b) the mobile devices manufactured by a particular manufacturer (e.g. if the device data is associated with a unified manufacturer identifier or a unified manufacturer+model identifier).

The characteristic determined at the step 606 may take many forms. For example, the characteristic could be a performance characteristic for the group of mobile devices. For example, the device data obtained could relate to the number of calls made by the mobile devices and the number of calls that those mobile devices dropped. Based on this, the characteristic determined for the group of mobile devices could be a dropped call rate for that group of mobile devices. In this case, the step 606 may comprise identifying a manufacturer and/or a model of a mobile device having a high drop call rate (e.g. a dropped call rate above a predetermined threshold). Corresponding action may be taken accordingly (at an optional step 608), either by the client system 300 (or an operator thereof), or by a third party. For example: if the client system 300 is operated by a mobile telephone network operator, then they may (a) adjust a configuration for the mobile telephone network to help reduce the dropped call rate for that group of mobile devices; and/or (b) report this determined characteristic to the manufacturer of that group of mobile device; if the client system 300 is operated by a manufacturer of the group of mobile devices (or if the manufacturer receives the above-mentioned report), then the manufacturer may implement a firmware/software update for that group of mobile devices to help reduce the dropped call rate for that group of mobile devices. As another example, the device data obtained could relate to malicious attacks against those mobile devices (e.g. whether malware is making its way onto those mobile devices and/or being detected on those mobile devices, etc). Based on this, the characteristic determined for the group of mobile devices could be a security characteristic. In this case, the step 606 may comprise identifying a manufacturer and/or a model of a mobile device having a security characteristic indicative of a security vulnerability (e.g. if malware is being detected on the mobile devices in the group, or potentially if the number of such detections of malware exceeds a predetermined threshold). Corresponding action may be taken accordingly, either by the client system 300 (or an operator thereof), or by a third party. For example: if the client system 300 is operated by a mobile telephone network operator, then they may (a) send a warning message (e.g. an SMS) to the mobile devices in the group of mobile devices to alert the users of those mobile devices of the security vulnerability and/or to suggest (or potentially instigate) a software update that helps address the security vulnerability; and/or (b) report this determined characteristic to the manufacturer of that group of mobile device; if the client system 300 is operated by a manufacturer of the group of mobile devices (or if the manufacturer receives the above-mentioned report), then the manufacturer may implement a firmware/software update to help address the security vulnerability. It will be appreciated that the characteristic determined at the step 606 may take other forms and that, optionally, one or more other types of action could be taken accordingly if the determined characteristic of the group of mobile devices meets one or more other criteria for the characteristic (as shown by the optional step 608 in figure 6).

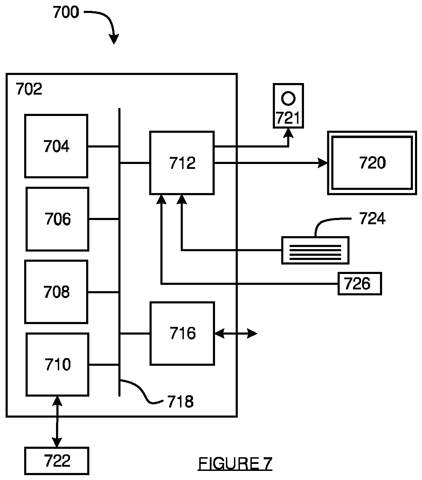

Figure 7 schematically illustrates an example of a computer system 700. The system 700 comprises a computer 702. The computer 702 comprises: a storage medium 704, a memory 706, a processor 708, a device interface 710, a user interface 712 and a network interface 716. Each of these components may be arranged to communicate with one or more of the other components via one or more communication buses 718 of the computer 702.

The storage medium 704 may be any form of non-volatile data storage device such as one or more of a hard disk drive, a magnetic disc, a solid-state-storage device, an optical disc, a ROM, etc. The storage medium 704 may store an operating system for the processor 708 to execute in order for the computer 702 to function. The storage medium 704 may also store one or more computer programs (or software or instructions or code).

The memory 706 may be any random access memory (storage unit or volatile storage medium) suitable for storing data and/or computer programs (or software or instructions or code).

The processor 708 may be any data processing unit suitable for executing one or more computer programs (such as those stored on the storage medium 704 and/or in the memory 706), some of which may be computer programs according to embodiments of the invention or computer programs that, when executed by the processor 708, cause the processor 708 to carry out a method according to an embodiment of the invention and configure the system 700 to be a system according to an embodiment of the invention. The processor 708 may comprise a single data processing unit or multiple data processing units operating in parallel, separately or in cooperation with each other. The processor 708, in carrying out data processing operations for embodiments of the invention, may store data to and/or read data from the storage medium 704 and/or the memory 706.

The device interface 710 may be any unit for providing an interface to a device 722 external to, or removable from, the computer 702. The device 722 may be a data storage device, such as one or more of an optical disc, a magnetic disc, a solid-state-storage device, etc. The device 722 may have processing capabilities - for example, the device 722 may be a smart card. The interface 710 may therefore access data from, or provide data to, or interface with, the device 722 in accordance with one or more commands that it receives from the processor 708.

The user interface 712 may be arranged to receive input from a user, or operator, of the system 700. The user may provide this input via one or more input devices of the system 700, such as a mouse (or other pointing device) 726 and/or a keyboard 724, that are connected to, or in communication with, the user interface 712. However, it will be appreciated that the user may provide input to the computer 702 via one or more additional or alternative input devices (such as a touch screen). The computer 702 may store the input received from the input devices via the user interface 712 in the memory 706 for the processor 708 to subsequently access and process, or may pass it straight to the processor 708, so that the processor 708 can respond to the user input accordingly.

The user interface 712 may be arranged to provide a graphical/visual and/or audio output to a user, or operator, of the system 700. As such, the processor 708 may be arranged to instruct the user interface 712 to form an image/video signal representing a desired graphical output, and to provide this signal to a monitor (or screen or display unit) 720 of the system 700 that is connected to the user interface 712. Additionally or alternatively, the processor 708 may be arranged to instruct the user interface 712 to form an audio signal representing a desired audio output, and to provide this signal to one or more speakers 721 of the system 700 connected to the user interface 712. However, it will be appreciated that output may be provided to the user via one or more additional or alternative mechanisms (e.g. vibration).

Finally, the network interface 716 provides functionality for the computer 702 to download data from and/or upload data to one or more data communication networks. This may be via wired and/or wireless communication.

It will be appreciated that the architecture of the system 700 illustrated in figure 7 and described above is merely exemplary and that other computer systems 700 with different architectures (for example with fewer components than shown in figure 7 or with additional and/or alternative components than shown in figure 7) may be used in embodiments of the invention. As examples, the computer system 700 could comprise one or more of: a personal computer; a server computer; a tablet; a laptop; etc. Additionally, it is possible that some components of the computer system 700 are not located in the computer 702 and are, instead, part of a computer network connected to the computer 702 via the network interface 716. Additionally or alternatively, the computer system 700 may comprise multiple computers 702, e.g. in a network of computers such as a cloud system of computing resources. The database system 110, the enhanced database system 120, and the client system 130 may each be implemented by one or more respective computer systems such as the computer system 700 described above.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method comprising:
generating an enhanced type allocation code (TAC) database based on an initial TAC database, wherein the initial TAC database comprises a plurality of records, wherein each record corresponds to a respective TAC for a respective set of mobile devices and comprises a first field for storing an identifier of the manufacturer of the respective set of mobile devices and a second field for storing an identifier of the model of the respective set of mobile devices, wherein said generating comprises:
adding, to the records of the initial TAC database, one or more additional fields; and
populating at least one of the one or more additional fields;
wherein at least one of the one or more additional fields added to a record is a third field for storing a further identifier of the respective set of mobile devices, wherein said populating is arranged so that records having (a) identifiers, stored in their first field and corresponding to the same manufacturer and/or (b) identifiers, stored in their second field and corresponding to the same model, have the same further identifier stored in their third field.

2. The method of claim 1, wherein said populating comprises using a set of one or more rules, wherein each rule represents a mapping that maps one or more identifiers for a particular manufacturer and/or for a particular model to the same further identifier.

3. The method of claim 1 or 2, wherein a third party is responsible for generating the initial TAC database and the method is performed by an entity other than the third party; wherein said method comprises the entity obtaining the initial TAC database from a computer system of the third party; and wherein the generated enhanced TAC database is stored at a computer system of the entity.

4. The method of any one of the preceding claims, comprising:
receiving, from a client system, a database query;
generating a response to the database query using the generated enhanced TAC database; and
providing the generated response to the client system.

5. A method comprising:
obtaining, for each mobile device of a plurality of mobile devices, corresponding device data, wherein the device data relates to one or more of: performance of the mobile device; configuration of the mobile device; and operational properties of the mobile device;
for each mobile device of the plurality of mobile devices, associating the corresponding device data with a further identifier, the further identifier stored in a third field of a record of an enhanced TAC database generated by a method according to any one of claims 1 to 3, the record corresponding to the TAC for that mobile device; and
determining a characteristic of a group of mobile devices, the group of mobile devices corresponding to one or more further identifiers, based on the device data associated with the one or more further identifiers.

6. The method of claim 5, wherein the group of mobile devices corresponds, at least in part, to: (a) the mobile devices of a particular model; and/or (b) the mobile devices manufactured by a particular manufacturer.

7. The method of claim 5 or 6, wherein said associating comprises determining, for at least one mobile device of the plurality of mobile devices, the TAC for that mobile device based on the International Mobile Equipment Identity (IMEI) for that mobile device.

8. The method of any one of claims 5 to 7, comprising performing one or more actions in respect of said group of mobile devices if the determined characteristic of said group of mobile devices meets one or more criteria for said characteristic.

9. The method of any one of claims 5 to 8, wherein the characteristic comprises a dropped call rate.

10. The method of claim 9, comprising identifying a manufacturer and/or a model of a mobile device having a high drop call rate.

11. The method of any one of claims 5 to 8, wherein the characteristic comprises a security characteristic.

12. The method of claim 11, comprising identifying a manufacturer and/or a model of a mobile device having a security characteristic indicative of a security vulnerability.

13. A system arranged to carry out a method according to any one of claims 1 to 12.

14. A computer program which, when executed by one or more processors, causes the one or more processors to carry out a method according to any one of claims 1 to 12.

15. A computer-readable medium storing a computer program according to claim 14.
